# EUROPÄISCHE PATENTSCHRIFT

(11) **EP 4 060 779 B1**
(45) Veröffentlichungstag und Bekanntmachung des Hinweises auf die Patenterteilung: **21.01.2026**
(21) Anmeldenummer: 22160448.1
(22) Anmeldetag: 07.03.2022
(51) Int. Cl.: H01M 10/04, H01M 50/105, B60L 50/60, B65H 39/10

(54) **FERTIGUNGSVORRICHTUNG FÜR BATTERIEN**
PRODUCTION DEVICE FOR BATTERIES
DISPOSITIF DE PRODUCTION POUR BATTERIES

(30) Priorität: 18.03.2021 DE 102021202645
(43) Veröffentlichungstag der Anmeldung: 21.09.2022
(73) Patentinhaber: PowerCo SE, 38239 Salzgitter (DE)
(72) Erfinder: BREUER, Alexander, 29227 Celle (DE); FIETKAU, Lars, 38176 Wendeburg (DE); GRESENS, Gunder, 38300 Wolfenbüttel (DE)
(74) Vertreter: FDST Patentanwälte

(56) Entgegenhaltungen:
- CN-U- 205 723 827
- DE-A1- 102016 225 184
- KR-A- 20200 059 618
- US-A1- 2015 298 338

## Beschreibung

Die Erfindung betrifft eine Fertigungsvorrichtung für Batterien sowie ein Verfahren zur Herstellung mehrerer Batterien mittels einer Fertigungsvorrichtung als auch die Verwendung einer Fertigungsvorrichtung.

In zunehmendem Maße werden Kraftfahrzeuge zumindest teilweise mittels eines Elektromotors angetrieben, sodass diese als Elektrofahrzeug oder Hybridfahrzeug ausgestaltet sind. Zur Bestromung des Elektromotors wird üblicherweise eine Hochvoltbatterie herangezogen, die mehrere einzelne Batteriemodule umfasst. Die Batteriemodule sind meist zueinander baugleich sowie miteinander elektrisch in Reihe und/oder parallel geschaltet, sodass die an der Hochvoltbatterie anliegende elektrische Spannung einem Vielfachen der mittels jedes der Batteriemodule bereitgestellten elektrischen Spannung entspricht. Jedes Batteriemodul wiederum umfasst mehrere Batterien, die meist in einem gemeinsamen Gehäuse angeordnet sind, und die miteinander elektrisch in Reihe und/oder parallel geschaltet sind.

Jede der Batterien wiederum umfasst üblicherweise mehrere Batteriezellen, die auch als galvanische Element bezeichnet werden. Diese weisen jeweils zwei Elektroden, nämlich eine Anode und eine Kathode, sowie einen dazwischen angeordneten Separator als auch einen Elektrolyten mit freibeweglichen Ladungsträgern auf. Als ein derartiger Elektrolyt wird beispielsweise eine Flüssigkeit herangezogen. In einer Alternative ist die Batterie als Festkörperbatterie ausgestaltet, und der Elektrolyt liegt als Festkörper vor.

Die Anode und die Kathode, die die Elektroden der Batteriezelle bilden, umfassen üblicherweise einen Träger, der als Stromableiter fungiert. An diesem ist üblicherweise ein Aktivmaterial befestigt, das ein Bestandteil einer auf den Träger aufgebrachten Schicht ist. Hierbei ist es möglich, dass in der Schicht bereits der Elektrolyt vorhanden ist, oder dieser wird nachträglich eingebracht. Zumindest jedoch ist das Aktivmaterial zur Aufnahme der Arbeitsionen, z.B. Lithium-Ionen, geeignet. Je nach Verwendung als Anode oder Kathode wird ein anderes Material für den Träger und eine unterschiedliche Art des Materials der Schicht verwendet.

Zum Schutz der Batteriezellen sind diese üblicherweise in einem Gehäuse der Batterie angeordnet. Auch wird mittels des Gehäuses zudem der Elektrolyt vor Umwelteinflüssen geschützt. In einer Ausführungsform ist das Gehäuse aus massivem Metall gefertigt, was einen vergleichsweisen hohen Schutz bietet. Dies erhöht jedoch das Volumen und das Gewicht der Batterie. Da die Batterien beim Kraftfahrzeug üblicherweise mittels weiterer Bestandteile, wie dem Gehäuse des Batteriemoduls, umgeben und daher geschützt sind, ist es möglich, das Gehäuse der Batterie vergleichsweise gewichtssparend auszugestalten und hierfür ein sogenanntes Pouchgehäuse zu verwenden. Bei diesem ist das Gehäuse aus einer Metallfolie erstellt. Somit ist ein Schutz verringert, jedoch ist es auch weiterhin möglich, die Batteriezellen der Batterien als gemeinsame Baueinheit zu bewegen und zu montieren, was eine Weiterverarbeitung vereinfacht.

In einer Ausführungsform ist die Metallfolie des Pouchgehäuses direkt nach Art einer Verpackung um die Batteriezellen geschlagen, wobei die Metallfolie mehrmals genickt wird. Hierbei ist es möglich, dass im Bereich der Knickstellen eine übermäßige Beanspruchung der Metallfolie erfolgt, sodass dort ein Eindringen von Luft und ein Auslaufen des Elektrolyten erfolgen kann. In einer alternativen Ausführungsform sind zwei zusammenhängende Schalen vorhanden, die aus einer gemeinsamen Metallfolie mittels Tiefziehens erstellt werden. Bei der Herstellung der Batterie werden die Batteriezellen mittels eines Greifers in eine der Schalen gelegt und die andere der Schalen nach Art eines Buches hierauf geklappt.

Bei der automatisierten Herstellung der Batterien mittels einer Fertigungsvorrichtung sind somit vergleichsweise viele bewegliche Teile vorhanden, die entsprechend angetrieben werden müssen. Dies erhöht die Kosten der Fertigungsvorrichtung. Soll zudem eine Herstellungsgeschwindigkeit erhöht werden, ist eine erhöhte Beschleunigung der Teile erforderlich, weswegen diese vergleichsweise robust ausgelegt werden müssen. Damit keine Rückwirkung der einzelnen schnell bewegenden Teile untereinander erfolgt, ist eine Stabilisierung der Fertigungsvorrichtung erforderlich, weswegen eine vergleichsweise große Stellfläche erforderlich ist.

In KR 2020 0059618 A ist eine Fertigungsvorrichtung für Batterien offenbart. Hierbei wird für den Transport einzelner Bestandteile der Batterien ein Förderband verwendet.

Aus DE 10 2016 225 184 A1 ist ein Batteriemodul offenbart, das mehre Pouchzellen umfasst.

US 2015/0298338 A1 zeigt eine Vorrichtung zum Schneiden für Separatoren von Batterien. Hierbei wird der Separator als Bandware zugeführt und geeignet abgelängt.

In CN 205723827 U ist eine Vorrichtung zur Herstellung von Elektroden gezeigt. Es sind mehrere Förderbänder vorhanden.

Der Erfindung liegt die Aufgabe zugrunde, eine besonders geeignete Fertigungsvorrichtung für Batterien, ein besonders geeignetes Verfahren zur Herstellung mehrerer Batterien mittels einer Fertigungsvorrichtung und eine besonders geeignete Verwendung einer Fertigungsvorrichtung anzugeben, wobei vorteilhafterweise eine Flexibilität verbessert und/oder Herstellungskosten verringert sind.

Hinsichtlich der Fertigungsvorrichtung wird diese Aufgabe durch die Merkmale des Anspruchs 1, hinsichtlich des Verfahrens durch die Merkmale des Anspruchs 4 und hinsichtlich der Verwendung durch die Merkmale des Anspruchs 5 erfindungsgemäß gelöst. Vorteilhafte Weiterbildungen und Ausgestaltungen sind Gegenstand der jeweiligen Unteransprüche.

Die Fertigungsvorrichtung dient der Herstellung von Batterien und ist somit eine Fertigungsvorrichtung für Batterien. Hierfür ist die Fertigungsvorrichtung geeignet, insbesondere vorgesehen und eingerichtet. Insbesondere ist die Fertigungsvorrichtung derart betrieben, dass mittels dieser die Batterien hergestellt werden. Insbesondere werden bei Betrieb der Fertigungsvorrichtung mittels dieser mehrere Batterien erstellt, vorzugsweise sukzessive hintereinander. Jedoch ist es geeigneterweise auch möglich, die Fertigungsanlagen lediglich zur Herstellung einer einzelnen Batterie zu betreiben. Die mit der Fertigungsvorrichtung hergestellten Batterien sind dabei zweckmäßigerweise zueinander baugleich. Zum Beispiel ist es jedoch auch möglich, die Fertigungsvorrichtung umzukonfigurieren, sodass unterschiedliche Typen von Batterien mittels der Fertigungsvorrichtung erstellt werden können.

Die mittels der Fertigungsvorrichtung erstellten Batterien sind im bestimmungsgemäßen Zustand vorzugsweise jeweils ein Bestandteil eines Kraftfahrzeugs. Hierfür sind die Batterien geeignet, insbesondere vorgesehen und eingerichtet. Im bestimmungsgemäßen Zustand sind die Batterien beispielsweise ein Bestandteil eines Energiespeichers des Kraftfahrzeugs, der mehrere derartige Batterien aufweist. Vorzugsweise sind hierbei die Batterien auf mehrere Batteriemodule aufgeteilt, die zueinander wiederum baugleich sind. Die Batterien sind insbesondere in einem Gehäuse des Energiespeichers bzw. des jeweiligen Batteriemoduls angeordnet und miteinander elektrisch parallel und/oder in Reihe geschaltet. Somit ist die an dem Energiespeicher/Batteriemodul anliegende elektrische Spannung ein Vielfaches der mittels jeder der Batterien bereitgestellten elektrischen Spannung. Das Gehäuse des Energiespeichers bzw. des jeweiligen Batteriemoduls ist bevorzugt aus einem Metall gefertigt, beispielsweise einem Stahl, wie einem Edelstahl, oder einer Aluminium-Legierung. Zu dessen Herstellung wird zum Beispiel ein Druckgussverfahren verwendet. Insbesondere ist das Gehäuse des Energiespeichers bzw. des jeweiligen Batteriemoduls verschlossen ausgestaltet. Zweckmäßigerweise ist in das Gehäuse des Energiespeichers bzw. des jeweiligen Batteriemoduls eine Schnittstelle eingebracht, die einen Anschluss des Energiespeichers/Batteriemoduls bildet. Die Schnittstelle ist dabei elektrisch mit den Batterien kontaktiert, sodass ein Einspeisen von elektrischer Energie und/oder eine Entnahme von elektrischer Energie aus den Batterien von außerhalb des Energiespeichers möglich ist, sofern an den Anschluss ein entsprechender Stecker gesteckt ist.

Das Kraftfahrzeug ist bevorzugt landgebunden und weist vorzugsweise eine Anzahl an Rädern auf, von denen zumindest eines, vorzugsweise mehrere oder alle, mittels eines Antriebs angetrieben sind. Geeigneterweise ist eines, vorzugsweise mehrere, der Räder steuerbar ausgestaltet. Somit ist es möglich, das Kraftfahrzeug unabhängig von einer bestimmten Fahrbahn, beispielsweise Schienen oder dergleichen, zu bewegen. Dabei ist es zweckmäßigerweise möglich, das Kraftfahrzeug im Wesentlichen beliebig auf einer Fahrbahn zu positionieren, die insbesondere aus einem Asphalt, einem Teer oder Beton gefertigt ist. Das Kraftfahrzeug ist beispielsweise ein Nutzkraftwagen, wie ein Lastkraftwagen (Lkw) oder ein Bus. Besonders bevorzugt jedoch ist das Kraftfahrzeug ein Personenkraftwagen (Pkw).

Mittels des Antriebs erfolgt zweckmäßigerweise eine Fortbewegung des Kraftfahrzeugs. Zum Beispiel ist der Antrieb, insbesondere der Hauptantrieb, zumindest teilweise elektrisch ausgestaltet, und das Kraftfahrzeug ist beispielsweise ein Elektrofahrzeug. Der Elektromotor wird zum Beispiel mittels des Energiespeichers betrieben, der geeigneterweise als eine Hochvoltbatterie ausgestaltet ist. Mittels der Hochvoltbatterie wird zweckmäßigerweise eine elektrische Gleichspannung bereitgestellt, wobei die elektrische Spannung zum Beispiel zwischen 200 V und 800 V und beispielsweise im Wesentlichen 400 V beträgt. Vorzugsweise ist zwischen dem Energiespeicher und dem Elektromotor ein elektrischer Umrichter angeordnet, mittels dessen die Bestromung des Elektromotors eingestellt wird. In einer Alternative weist der Antrieb zusätzlich einen Verbrennungsmotor auf, sodass das Kraftfahrzeug als Hybrid-Kraftfahrzeug ausgestaltet ist. In einer Alternative wird mittels des Energiespeichers ein Niedervoltbordnetz des Kraftfahrzeugs gespeist, und mittels des Energiespeichers wird insbesondere eine elektrische Gleichspannung von 12 V, 24 V oder 48 V bereitgestellt.

In einer weiteren Alternative ist die Batterie ein Bestandteil eines Flurförderfahrzeug, einer Industrieanlage, eines handgeführten Geräts, wie beispielsweise eines Werkzeugs, insbesondere eines Akkuschraubers. In einer weiteren Alternative ist die Batterie ein Bestandteil einer Energieversorgung und wird dort beispielsweise als sogenannte Pufferbatterie verwendet. In einer weiteren Alternative ist die Batterie ein Bestandteil eines tragbaren Geräts, beispielsweise eines tragbaren Mobiltelefons, oder eines sonstigen Wearables. Auch ist es möglich, eine derartige Batterie im Campingbereich, Modellbaubereich oder für sonstige Outdoor-Aktivitäten zu verwenden.

Jede mittels der Fertigungsvorrichtung hergestellte/erstellte Batterie umfasst einen Zellstapel, der eine oder vorzugsweise mehrere übereinandergestapelte Batteriezellen umfasst, die jeweils insbesondere ein galvanisches Element ist. Die oder jede Batteriezellen umfasst zwei Elektroden, nämlich eine Anode und eine Kathode, und einen dazwischen angeordneten Separator. Vorzugsweise umfasst jede Elektrode einen Träger, der auch als Ableiter bezeichnet wird. Zwischen den beiden Trägern ist ein Aktivmaterial angeordnet, das zur Aufnahme von Arbeitsionen, wie Lithium-Ionen, geeignet sowie vorgesehen und eingerichtet ist. Als Aktivmaterial wird beispielsweise ein Lithium-Metall-Oxid, wie Lithium-Cobalt(III)-Oxid (LiCoO2), NMC, NCA, LFP, GIC, LTO verwendet. Alternativ wird als Aktivmaterial NMC622 oder NMC811 herangezogen. Beispielsweise ist dabei das Aktivmaterial einer der Elektroden zugeordnet. Besonders bevorzugt jedoch ist jeder der Elektroden jeweils ein Aktivmaterial zugeordnet, wobei sich die beiden Aktivmaterialien beispielsweise unterscheiden.

Ferner weist die Batterie ein Pouchgehäuse mit einer ersten Pouchgehäusehälfte und einer zweiten Pouchgehäusehälfte auf, die insbesondere aneinander befestigt sind, vorzugsweise friedlich. Geeigneterweise sind die beiden Pouchgehäusehälften miteinander versiegelt. Die beiden Pouchgehäusehälften sind jeweils aus einer Metallfolie erstellt, vorzugsweise mittels Tiefzeihens. Als Metallfolie wird bevorzugt eine Metallkunstoff-Verbundfolie herangezogen. Beispielsweise sind die beiden Pouchgehäusehälften zueinander baugleich, spiegelverkehrt oder gänzlich voneinander abweichend ausgestaltet. Im bestimmungsgemäßen Zustand ist hierbei der Zellstapels innerhalb des Pouchgehäuses angeordnet und somit mittels der beiden Pouchgehäusehälften umgeben. Insbesondere sind vor der Herstellung der Batterie die beiden Pouchgehäusehälften zueinander getrennt, also insbesondere bevor die Fertigungsvorrichtung verwendet wird.

Die Batterie weist vorzugsweise einen Elektrolyten auf, der eine Anzahl an freibeweglichen Ladungsträger, wie Lithium-Ionen, bereitstellt. Beispielsweise ist der Elektrolyt ein Bestandteil der Anode und/oder Kathode, vorzugsweise des jeweiligen Aktivmaterials, oder ist zumindest geeignet, sich dort anzulagern und somit von diesen aufgenommen zu werden. Die Batteriezelle ist beispielsweise eine Festkörperbatterie, sodass der Elektrolyt als Festkörper vorliegt. Alternativ ist der Elektrolyt flüssig. Mittels des Pouchgehäuse wird insbesondere ein Austritt des Elektrolyten verhindert und/oder ein Gelangen von Umgebungsluft zu dem Elektrolyten und/oder dem Aktivmaterial verhindert, sodass eine ungewollte chemische Reaktion zwischen diesen vermieden wird. Vorzugsweise wird nach dem Aneinanderfügen der beiden Pouchgehäusehälften durch eine belastende Öffnung der Elektrolyt in das Pouchgehäuse eingefüllt.

Die Fertigungsvorrichtung umfasst eine erste Zuführvorrichtung für die erste Pouchgehäusehälfte sowie eine zweite Zuführvorrichtung für die zweite Pouchgehäusehälfte. Mit anderen Worten sind die beiden Pouchgehäusehälften separat und werden mittels der jeweiligen Zuführvorrichtung zugeführt, wenn diese betrieben werden. Somit dient die erste Zuführvorrichtung dem Zuführen der ersten Pouchgehäusehälfte und die zweite Zuführvorrichtung dem Zuführen der zweite Pouchgehäusehälfte, und diese sind hierfür geeignet, insbesondere vorgesehen und eingerichtet. Bei Betrieb der Fertigungsvorrichtung werden zweckmäßigerweise mittels der ersten und der zweiten Zuführvorrichtung die jeweilige Pouchgehäusehälfte zugeführt.

Ferner weist die Fertigungsvorrichtung eine dritte Zuführvorrichtung für den Zellstapel auf. Die dritte Zuführvorrichtung dient somit dem Zuführen des Zellstapels und ist hierfür geeignet, insbesondere vorgesehen eingerichtet. Somit werden bei Betrieb der Fertigungsvorrichtung mittels der drei Zuführvorrichtungen die drei Komponenten zugeführt. Insbesondere werden mittels der Zuführvorrichtung die einzelnen Komponenten, also die Pouchgehäusehälften sowie der Zellstapel, derart zugeführt, dass diese aneinander und miteinander gefügt werden.

Die dritte Zuführvorrichtung umfasst ein Förderband. Das Förderband ist insbesondere geeignet, zweckmäßigerweise vorgesehen und eingerichtet, den Zellstapel zuzuführen. Insbesondere ist das Förderband umlaufen/ geschlossen ausgestaltet, sodass ein Betrieb vereinfacht ist. Zum Beispiel ist das Förderband ein Gurtbandförderer. Vorzugsweise ist das Förderband parallel zu dem Zellstapel angeordnet, und dieser wird beispielsweise zum Zuführen auf das Förderband gelegt.

Aufgrund des Förderbands ist eine Anzahl an beweglichen Teilen vergleichsweise gering. Hierbei ist es zudem möglich, das Förderband im Wesentlichen kontinuierlich zu betreiben und somit auch die Zellstapel kontinuierlich zuzuführen, wobei beispielsweise die zugeführten Zellstapel zueinander einen Abstand auf dem Förderband aufweisen. Da das Förderband kontinuierlich betrieben wird, ist eine Beschleunigung nicht erforderlich, sodass die dritte Zuführvorrichtung vergleichsweise filigran ausgestaltet werden kann, sodass ein Gewicht der angetriebenen Teile reduziert ist. Infolgedessen sind Herstellungskosten reduziert. Auch ist es somit möglich, die Herstellungszeit für die Batterien zu verändern, nämlich indem die Geschwindigkeit, mit der das Förderband angetrieben ist, abgeändert wird. Infolgedessen ist es möglich, die mit der Fertigungsvorrichtung erstellte Anzahl an Batterien auf aktuelle Anforderungen anzupassen, sodass eine Flexibilität erhöht ist. Auch ist eine vergleichsweise große Herstellungsgeschwindigkeit ermöglicht, nämlich indem das Förderband mit einer vergleichsweise hohen Geschwindigkeit bewegt wird.

Insbesondere werden zeitlich nacheinander mehrere erste und zweite Pouchgehäusehälften und Zellstapel zugeführt, wenn mehrere Batterien erstellt werden sollen. Geeigneterweise wird hierbei pro Batterie jeweils eine erste und eine zweite Pouchgehäusehälfte sowie ein Zellstapel verwendet/benötigt. Zweckmäßigerweise werden die Zuführvorrichtungen aufeinander abgestimmt betrieben. Hierfür werden beispielsweise entsprechende Sensoren verwendet, anhand derer der aktuelle Zustand der jeweiligen Zuführvorrichtung ermittelt wird. Dabei ist geeigneterweise jeder Zuführvorrichtung ein entsprechender Sensoren zugeordnet. Alternativ oder in Kombination hierzu erfolgt eine kinematische Abstimmung der Zuführvorrichtungen miteinander, insbesondere eine taktile. Beispielsweise greifen zum Abstimmen einzelne Teile der unterschiedlichen Zuführvorrichtung mechanisch ineinander Vorzugsweise sind aufgrund der Abstimmung der Zuführvorrichtung aufeinander diese zueinander synchronisiert betreiben.

Das Förderband umfasst beispielsweise lediglich einen einzigen Gurt, oder mehrere zueinander parallel verlaufende Gurte. Infolgedessen ist eine Trägheit des Förderbands weiter reduziert. Auch ist es möglich, bestimmte Bereiche des Zellstapels frei von dem Gurt des Förderbands zu halten, sodass mittels des Förderbands keine Beschädigung dieser Bereiche des Zellstapels erfolgt.

Geeigneterweise weist die dritte Zuführvorrichtung ein zweites Förderband auf. Dieses ist insbesondere parallel zu dem Förderband angeordnet. Zumindest jedoch ist das zweite Förderband derart angeordnet, dass der Zellstapel zwischen dem Förderband und dem zweiten Förderband gehalten ist, wenn dieser mittels der dritten Zuführvorrichtung zugeführt wird. Insbesondere sind die beiden Förderbänder parallel zu einer Ausdehnungsebene des Zellstapels angeordnet. Aufgrund des zweiten Förderbands wird der Zellstapels beim Zuführen stabilisiert, sodass der Zellstapel zu einem gewünschten Ort zum Zusammenführen mit den Pouchgehäusehälften sicher transportiert werden kann. Hierbei ist mittels der beiden Förderbänder insbesondere ein Verkippen des Zellstapels vermieden. Geeigneterweise ist bei Betrieb der Zellstapel kraftschlüssig zwischen den beiden Förderbänder gehalten, sodass ein sicherer Transport erfolgt. Vorzugsweise ist das zweite Förderband baugleich zu dem Förderband, sodass Gleichteile verwendet werden können.

Die erste Zuführvorrichtung weist ein erstes Transportband auf, das von einer ersten Aufnahmestation für die erste Pouchgehäusehälfte zu einer Montagepositionen geführt ist. Die erste Aufnahmestation dient dem Aufnehmen der ersten Pouchgehäusehälfte mittels des erste Transportbands. Zumindest jedoch wird an der ersten Aufnahmestation das erste Transportband mit der/den ersten Pouchgehäusehälfte(n) bestückt. Das erste Transportband ist beispielsweise aus einem Kunststoff, insbesondere einem Gummi, gefertigt. Geeigneterweise ist das erste Transportband umlaufend ausgestaltet, sodass ein Betrieb vereinfacht ist.

Die zweite Zuführvorrichtung umfasst ein zweites Transportband, das beispielsweise umlaufend ausgestaltet ist. Das zweite Transportband ist zumindest von einer zweiten Aufnahmestation, die der Aufnahme der zweiten Pouchgehäusehälfte(n) dient und hierfür geeignet, insbesondere vorgesehen und eingerichtet ist, zu der Montageposition geführt, zu der auch das erste Transportband geführt ist. Hierbei ist die erste Aufnahmestation von der zweiten Aufnahmestation beabstandet.

Geeigneterweise ist zumindest eines der Transportbänder, vorzugsweise beide, angetrieben. Insbesondere ist das zweite Transportband baugleich zu dem erste Transportband und zum Beispiel spiegelbildlich zu diesem angeordnet, wobei die Spiegelsymmetrie zumindest teilweise mittels der Montageposition vorgegeben ist. Geeigneterweise verlaufen die beiden Transportbänder zumindest teilweise zueinander parallel, wobei der Beginn des parallelen Abschnitts der beiden Transportbänder mittels der Montageposition vorgegeben ist. Insbesondere erfolgt in dem Abschnitt, in dem die bei beiden Transportbänder zueinander parallel bewegt werden/angeordnet sind, ein Aneinanderfügen der beiden Pouchgehäusehälften bei Betrieb. Beispielsweise ist der Verlauf der Transportbänder zwischen der jeweiligen Aufnahmestation und der Montageposition antiparallel oder besonders bevorzugt schräg, sodass die beiden Transportbänder zueinander einen Winkel einschließen, der beispielsweise zwischen 90° und 45° ist, wobei mittels der Montageposition der Scheitel des Winkels vorgegeben ist. Mit anderen Worten sind die Transportbänder Y-förmig angeordnet.

Aufgrund der Transportbänder sowie deren entsprechende Anordnung ist es möglich, die jeweiligen Pouchgehäusehälften an unterschiedlichen Orten, nämlich den jeweiligen Aufnahmestationen, aufzunehmen, weswegen eine Komplexität der Fertigungsvorrichtung und folglich auch Herstellungskosten verringert sind. Hierbei werden diese zu einer gemeinsamen Montagepositionen transportiert, sodass dort ein Aneinanderfügen der Pouchgehäusehälften erfolgen kann. Aufgrund der Transportbänder ist es möglich, die erste und zweite Zuführvorrichtung im Wesentlichen kontinuierlich zu betreiben. Vorzugsweise werden diese bei Betrieb kontinuierlich betrieben. Aufgrund des kontinuierlichen Betreibens ist eine Beschleunigung der Zuführvorrichtungen im Wesentlichen nicht erforderlich, und diese können, wie die dritte Zuführvorrichtung, vergleichsweise filigran ausgeführt werden. Mit anderen Worten ist die Anzahl der der beschleunigten Teilen weiter verringert.

Insbesondere umfasst die Fertigungsvorrichtung ein Fügewerkzeug zum Aneinanderfügen der Pouchgehäusehälften, wobei dieses beispielsweise an der Montageposition oder in dem Abschnitt, in den die beiden Transportbänder zueinander parallel verlaufen, angeordnet ist. Zum Beispiel wird bei Betrieb zumindest eine der Pouchgehäusehälften zumindest randseitig mit einem Klebstoff versehen. In dem Abschnitt, in dem die beiden Transportbänder zueinander parallel verlaufen, werden die beiden Pouchgehäusehälften mittels der Transportbänder aufeinander gedrückt, sodass die Pouchgehäusehälften mittels des Klebstoffs miteinander verklebt werden.

Insbesondere ist die dritte Zuführvorrichtung derart ausgestaltet, dass der Zellstapels mittels der dritten Zuführvorrichtung bis zu der Montageposition transportiert wird. Zweckmäßigerweise werden bei Betrieb der Zellstapel und die beiden Pouchgehäusehälften an der Montageposition aneinandergefügt, also insbesondere an in einer einzigen Stelle, sodass eine Größe der Fertigungsvorrichtung weiter verringert ist. Hierbei wird mittels der dritten Zuführvorrichtung der Zellstapels insbesondere in zumindest eine der Pouchgehäusehälften eingelegt und beispielsweise an einer inneren Seite der jeweiligen Pouchgehäusehälfte angelegt und folglich dort stabilisiert. Alternativ oder in Kombination hierzu ist das Förderband und auch das etwaige zweite Förderband im Wesentlichen vertikal angeordnet, und die jeweiligen Förderbänder enden oberhalb der Montageposition. Zum Beispiel ist hierbei ein Abstand zwischen der Montageposition und den Enden des Förderbands/Förderbänder vorhanden, sodass bei Austritt des Zellstapels aus dem Förderband dieses zu der Montageposition fällt. Geeigneterweise ist der Abstand und somit die Falldistanz vergleichsweise gering und zum Beispiel zwischen 0,5 cm und 5 cm. Auf diese Weise ist eine Beschädigung des Zellstapels vermieden.

Beispielsweise werden die Pouchgehäusehälften im Bereich der Montagepositionen aufgrund der Führung mittels der Transportbänder elastisch verformt. Besonders bevorzugt jedoch ist das erste Transportband mittels einer erste Bandrolle geführt, an der das erste Transportband somit mechanisch direkt anliegt. Die erste Bandrolle ist geeigneterweise drehbar gelagert, sodass eine Reibung verringert ist. Die erste Bandrolle ist zwischen der ersten Aufnahmestation und der Montageposition angeordnet, wobei sich das erste Transportband zwischen der ersten Bandrolle und dem zweiten Transportband befindet. Zudem ist die erste Bandrolle längsverschieblich gelagert, zweckmäßigerweise in Richtung des zweiten Transportbandes. Infolgedessen ist es möglich, mittels der ersten Bandrolle das erste Transportband auf das zweite Transportband zu zubewegen, sodass mittels der Position der ersten Bandrolle der Abstand des ersten Transportbands zu dem zweiten Transportband bestimmt ist. Insbesondere ist es hierbei möglich, mittels der ersten Bandrolle das erste Transportband auf das zweite Transportband zu legen. Zusammenfassend ist es möglich, mittels der längsverschieblichen ersten Bandrolle den Abstand des ersten Transportbands zu dem zweite Transportband zu verändern/variieren, wie zu verringert.

Geeigneterweise umfasst die Fertigungsvorrichtung ferner eine zweite Bandrolle, mittels derer das zweite Transportband geführt ist, und die zwischen der Montageposition und der zweiten Aufnahmestation angeordnet ist. Hierbei ist das zweite Transportband zwischen dem ersten Transportband und der zweiten Bandrolle angeordnet. Insbesondere ist die zweite Bandrolle baugleich zu der ersten Bandrolle. Hierbei ist es vorzugsweise möglich, die beiden Bandrollen aufeinander zu zubewegen, und somit auch die beiden Transportbänder. Geeigneterweise ist es dabei möglich, mittels der beiden Bandrollen die beiden Transportbänder aneinander anzulegen, sodass diese zwischen den beiden Bandrollen und der Montageposition parallel verlaufen. Geeigneterweise ist hierbei der Verlauf der Transportbänder zwischen den Bandrollen und der Montageposition parallel zu dem nachfolgenden Verlauf der Transportbänder.

Insbesondere ist die Fertigungsvorrichtung derart betrieben, dass mittels einer oder beider Bandrollen, sofern diese vorhanden sind, die beiden Pouchgehäusehälften aufeinander gelegt werden, nachdem diese die jeweilige Bandrolle passiert haben oder an der Montageposition angelangt sind. Hierfür werden die Transportbänder verformt und die darauf aufliegenden Pouchgehäusehälften bewegt, sodass bei Passieren der Montagepositionen keine Verformung der Pouchgehäusehälften erfolgt. Somit ist eine Beschädigung der Pouchgehäusehälften vermieden.

Beispielsweise sind die Transportbänder jeweils ein unversehrter Gurt. Besonders bevorzugt jedoch weist jedes der Transportbänder mehrere Aussparungen zur Aufnahme der jeweiligen Pouchgehäusehälften auf oder zumindest eines Teils hiervon. Insbesondere werden mittels der jeweiligen Aussparung eine topfförmige Schale der jeweiligen Pouchgehäusehälften aufgenommen, insbesondere formschlüssig. Geeigneterweise erfolgt das Aufnehmen hierbei an der jeweiligen Aufnahmestation. Auf diese Weise ist eine Position der Pouchgehäusehälften auf dem jeweiligen Transportband vorgegeben, sodass ein gezieltes Bewegen der beiden Pouchgehäusehälften zueinander ermöglicht ist, was einen Ausschuss bei der Fertigung der Batterien verringert.

Bei dem Verfahren wird zur Herstellung mehrerer Batterien wird eine Fertigungsvorrichtung herangezogen, die eine erste Zuführvorrichtung für eine erste Pouchgehäusehälfte und eine zweite Zuführvorrichtung für eine zweite Pouchgehäusehälfte sowie eine dritte Zuführvorrichtung für einen Zellstapel aufweist, wobei die dritte Zuführvorrichtung ein Förderband umfasst. Bei dem Verfahren wird die dritte Zuführvorrichtung kontinuierlich betrieben, sodass kontinuierlich Zellstapel zugeführt werden. Geeigneterweise werden mittels der Zuführvorrichtungen mehrere erste Pouchgehäusehälften, mehrere zweite Pouchgehäusehälften und mehrere Zellstapel zugeführt. Insbesondere werden auch die erste und zweite Zuführvorrichtung, sofern möglich, kontinuierlich betrieben. Mittels Anpassen der Geschwindigkeit der Zuführvorrichtung(en) ist es hierbei möglich, den Ausstoß der Fertigungsvorrichtung anzugeben passen. Zweckmäßigerweise weist die Fertigungsvorrichtung eine Steuereinheit auf, die geeignet, insbesondere vorgesehen und eingerichtet ist, das Verfahren durchzuführen.

Die Fertigungsvorrichtung, die eine erste Zuführvorrichtung für eine erste Pouchgehäusehälfte und eine zweite Zuführvorrichtung für eine zweite Pouchgehäusehälfte sowie eine dritte Zuführvorrichtung für einen Zellstapel aufweist, wobei die dritte Zuführvorrichtung ein Förderband umfasst, wird verwendet, um mehrere Batterien herzustellen. Hierbei wird insbesondere die dritte Zuführvorrichtung, vorzugsweise sämtliche Zuführvorrichtungen, sofern möglich, kontinuierlich betrieben.

Die Erfindung betrifft ferner eine Batterie, die mittels einer entsprechenden Fertigungsanlagen und oder entsprechend des Verfahrens hergestellt wurde. Die Batterie umfasst hierbei zwei Pouchgehäusehälften, die zu einem Pouchgehäuse zusammengefügt sind. Innerhalb des Pouchgehäuses ist hierbei ein Zellstapel angeordnet.

Die im Zusammenhang mit der Fertigungsvorrichtung beschriebenen Vorteile und Weiterbildungen sind sinngemäß auch auf das Verfahren/die Verwendung/ die Batterie und untereinander zu übertragen und umgekehrt.

Nachfolgend werden Ausführungsbeispiele der Erfindung anhand einer Zeichnung näher erläutert. Darin zeigen:
- Fig. 1: schematisch vereinfacht ein Kraftfahrzeug, das eine Hochvoltbatterie mit mehreren baugleichen Batterien aufweist,
- Fig. 2: in einer Schnittdarstellung schematisch eine der Batterien, die zwei Pouchgehäusehälften und einen Zellstapel aufweist,
- Fig. 3: ein Verfahren zur Herstellung mehrerer Batterien mittels einer Fertigungsvorrichtung,
- Fig. 4: perspektivisch ausschnittsweise die Fertigungsvorrichtung,
- Fig. 5 -10: jeweils perspektivisch unterschiedliche Bereiche der Fertigungsvorrichtung,
- Fig. 11, 12: in einer Seitenansicht jeweils eine Variante der Fertigungsvorrichtung, und
- Fig. 13, 14: in einer Draufsicht weitere Varianten der Variante der Fertigungsvorrichtung.

Einander entsprechende Teile sind in allen Figuren mit den gleichen Bezugszeichen versehen.

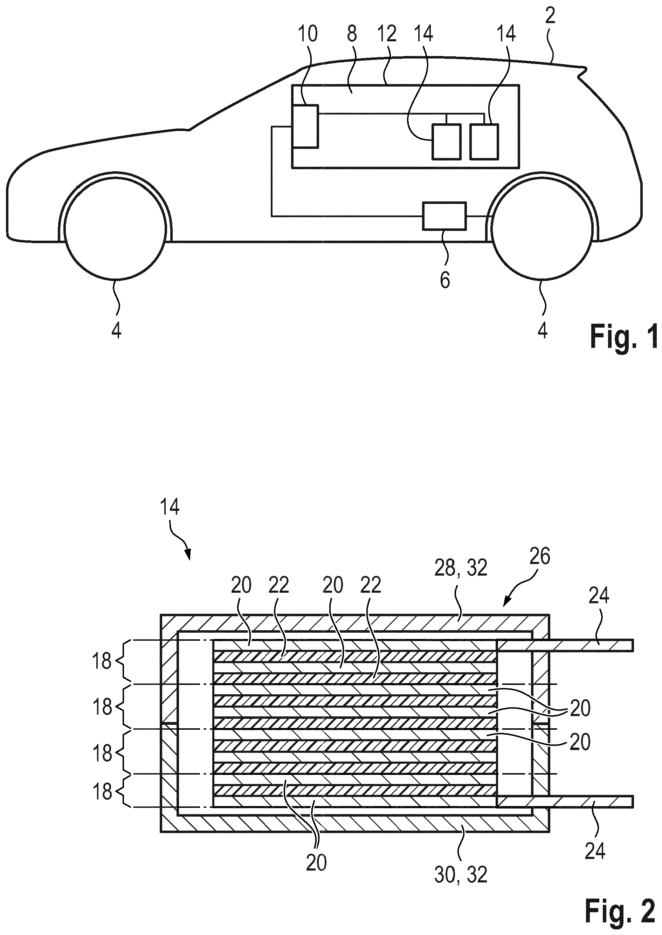

In Figur 1 ist schematisch vereinfacht ein Kraftfahrzeug 2 in Form eines Personenkraftwagens (Pkw) dargestellt. Das Kraftfahrzeug 2 weist eine Anzahl an Rädern 4 auf, von denen zumindest einige mittels eines Antriebs 6 angetrieben sind, der einen Elektromotor umfasst. Somit ist das Kraftfahrzeug 2 ein Elektrofahrzeug oder ein Hybrid-Fahrzeug. Der Antrieb 6 weist einen Umrichter auf, mittels dessen der Elektromotor bestromt ist. Der Umrichter des Antriebs 6 wiederum ist mittels eines Energiespeichers 8 in Form einer Hochvoltbatterie bestromt. Hierfür ist der Antrieb 6 mit einer Schnittstelle 10 des Energiespeichers 8 verbunden, die in ein Gehäuse 12 des Energiespeichers 8 eingebracht ist, das aus einem Edelstahl erstellt ist. Innerhalb des Gehäuses 12 des Energiespeichers 8 sind mehrere Batteriemodule angeordnet, von denen ein Teil der Batteriemodule zueinander elektrisch in Reihe und diese wiederum elektrisch zueinander parallel geschaltet sind. Der elektrische Verband der Batteriemodule ist mit der Schnittstelle 10 elektrisch kontaktiert, sodass bei Betrieb des Antriebs 6 ein Entladen oder Laden (Rekuperation) der Batteriemodule erfolgt. Aufgrund der elektrischen Verschaltung ist dabei die an der Schnittstelle 10 bereitgestellte elektrische Spannung, die 400 V beträgt, ein Vielfaches der mit den zueinander baugleichen Batteriemodule jeweils bereitgestellten elektrischen Spannung. Jedes der Batteriemodule wiederum umfasst mehrere Batterien 14, von denen hier zwei dargestellt sind. Die Batterien 14 jedes Batteriemoduls sind elektrisch miteinander zum Teil parallel und anderenfalls elektrisch in Reihe geschaltet, sodass die mittels jedes Batteriemoduls bereitgestellte elektrische Spannung einem Vielfachen der mittels einer der Batterien 14 bereitgestellten elektrischen Spannung beträgt.

In Figur 2 ist in einer Schnittdarstellung eine der zueinander baugleichen Batterien 14 dargestellt. Die Batterie 14 weist einen Zellstapel 16 mit mehrere aufeinandergestapelten Batteriezellen 18 auf, von denen hier vier gezeigt sind. Jede der Batteriezellen 18 weist zwei Elektroden 20, nämlich eine Anode und eine Kathode, auf, die jeweils flächig ausgestaltet sind, und zwischen denen ein Separator 22 angeordnet ist und an diesen anliegt. Jeweils benachbarte Batteriezellen 18 liegen über einen weiteren Separator 22 aneinander an. Die Elektroden 20 umfassten einen nicht näher dargestellten Ableiter oder Träger, der mit einem Aktivmaterial versehen ist, wie NMC. Der Ableiter der Anode ist aus Kupfer und der Ableiter der Kathode aus Aluminium erstellt. Insbesondere sind die Ableiter jeweils folienförmig, sodass eine Dicke der Batteriezellen 18 vergleichsweise gering ist. Die Stapelrichtung der Separatoren 22 sowie der Elektroden 20 jeder Batteriezelle 18 ist hierbei gleich der Stapelrichtung der Batteriezellen 18 zu dem Zellstapel 16. Die Elektroden 20, die den Zellstapel 16 an dem jeweiligen Ende begrenzen, sind jeweils mit einem elektrischen Anschluss 24 elektrisch kontaktiert, der jeweils mittels eines Kupferblechstreifens gebildet ist.

Der aus den Batteriezellen 18 gebildet Zellstapel 16 ist innerhalb eines Pouchgehäuses 26 angeordnet und mittels dessen umfangsseitig vollständig umgeben. Das Pouchgehäuses 26 umfasst eine erste Pouchgehäusehälfte 28 und eine zweite Pouchgehäusehälfte 30, die zueinander spiegelbildlich sind, und die jeweils aus einer topfförmigen Schale 32 gebildet sind. Die topfförmigen Schalen 32 nehmen hierbei den Zellstapel 16 jeweils auf und sind mittels Tiefziehens einer Metallfolie, insbesondere einer Metallkunstoff-Verbundfolie, erstellt.

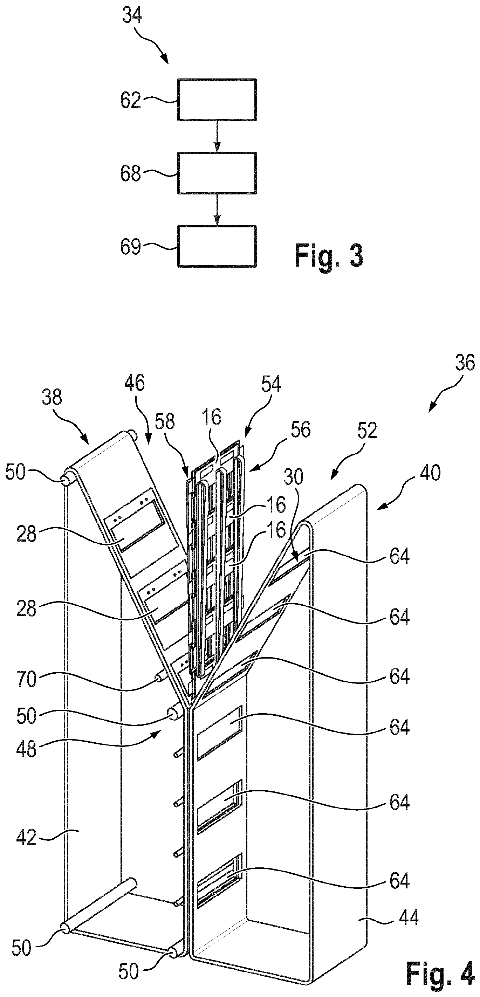

In Figur 3 ist ein Verfahren 34 zur Herstellung mehrerer dieser Batterien 14 dargestellt, wofür eine in Figur 4 perspektivisch ausschnittsweise gezeigte Fertigungsvorrichtung 36 verwendet wird. Die Fertigungsvorrichtung 36 weist eine erste Zuführvorrichtung 38 für die ersten Pouchgehäusehälften 28 und eine zweite Zuführvorrichtung 40 für die zweiten Pouchgehäusehälften 30 auf. Die beiden Zuführvorrichtung 38, 40 sind zueinander spiegelbildlich angeordnet, und die erste Zuführvorrichtung 38 weist ein umlaufendes erstes Transportband 42 und die zweite Zuführvorrichtung 40 ein umlaufendes zweites Transportband 44 auf, die jeweils aus einem aus einem Gummi erstellten Gurt gebildet sind.

Das erste Transportband 42 ist von einer ersten Aufnahmestation 46 teilweise in vertikaler Richtung nach unten sowie in horizontaler Richtung zu einer Montageposition 48 geführt und von dort in vertikaler Richtung senkrecht nach unten. Von dort wird das erste Transportband 42 erneut zu der ersten Aufnahmestation 46 geführt, wofür jeweils Führungsrollen 50 verwendet werden. Das zweite Transportband 44 ist von einer zweiten Aufnahmestation 52 ebenfalls zu der Montageposition 48 und von dort parallel zu dem ersten Transportband 42 in vertikaler Richtung nach unten geführt, wobei die beiden Transportbänder 42, 44 teilweise aneinander anliegen oder in einem Abstand zueinander angeordnet sind, der geringer als die Dicke des Pouchgehäuses 26 ist. Das zweite Transportband 44 ist ebenfalls mittels nicht näher dargestellter Führungsrollen 50 erneut zu der zweite Aufnahmestation 52 geführt, die sich in vertikaler Richtung auf gleicher Höhe wie die erste Aufnahmestation 46, jedoch von dieser beabstandet, befindet. Somit ist mittels der Transportbänder 42, 44 zwischen den Aufnahmestationen 46, 52 und der Montagepositionen 48 ein Winkel gebildet, der im Wesentlichen 60° ist. Auch sind die Transportbänder 42, 44 in einem Abschnitt, beginnend mit den jeweiligen Aufnahmestationen 46, 52 über die Montageposition 48 und endend mit dem Abschnitt, in dem die beiden Transportbänder 42, 44 zueinander parallel und teilweise aneinander anliegend geführt sind, eine Y-Form gebildet.

Ferner weist die Fertigungsvorrichtung 36 eine in vertikaler Richtung angeordnete dritte Zuführvorrichtung 54 für die Zellstapels 16 auf. Die dritte Zuführvorrichtung 54 ist in vertikaler Richtung oberhalb der Montageposition 48 und fluchtend mit den zueinander parallel angeordneten Transportbändern 42, 44 nach der Montagepositionen 48 angeordnet.

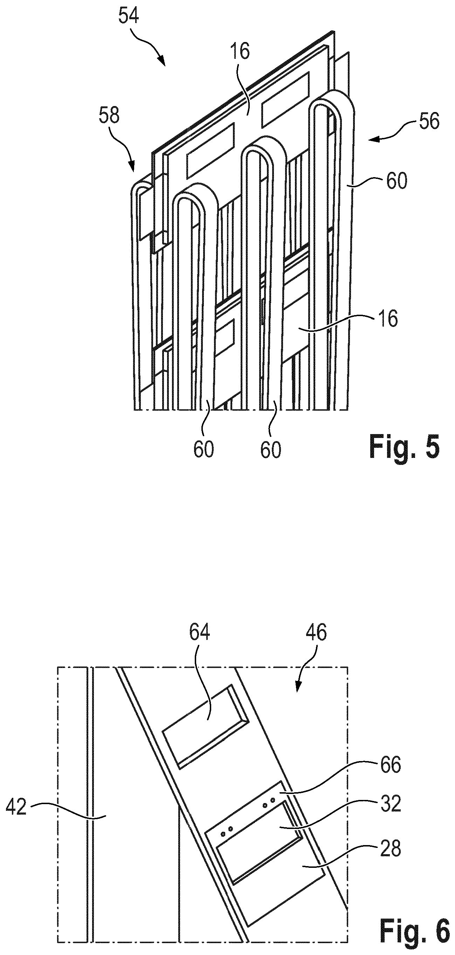

in Figur 5 ist perspektivisch der Beginn der dritten Zuführvorrichtung 54, also an dem der Montageposition 48 gegenüberliegenden Ende, dargestellt. Die dritte Zuführvorrichtung 54 weist ein Förderband 56 sowie ein zweites Förderband 58 auf, die zueinander baugleich sind, und die jeweils drei zueinander beabstandet Gurte 60 aufweisen. Hierbei ist das zweite Förderband 58 derart bezüglich des Förderbands 56 angeordnet, dass die Zellstapel 16 zwischen den beiden Förderbändern 56, 58 gehalten und lediglich bei Betrieb der Förderbänder 46, 58 bewegt werden. Insbesondere ist hierbei ein Kraftschluss zwischen den Förderbändern 56, 58 und dem dazwischen angeordneten Zellstapels 16 realisiert.

Das Verfahren 34 sieht vor, dass in einem ersten Arbeitsschritt 62 an dem von der Montageposition 48 gegenüberliegenden Enden der dritten Zuführvorrichtung 54 die Zellstapel 16 zwischen die Förderbänder 56, 58 eingelegt werden, wie in Figur 5 dargestellt. Hierbei erfolgt gemäß dem Verfahren 34 ein kontinuierlich mit der Betrieb der dritten Zuführvorrichtung 54 und somit auch der beiden Förderbänder 56, 58, sodass ein im Wesentlichen kontinuierliches Bereitstellen der Zellstapels 16 möglich ist. Hierbei werden die einzelnen Zellstapels 16 zueinander beabstandet zwischen die Förderbänder 56, 58 eingelegt.

Zudem werden die beiden Transportbänder 42, 44 an der jeweiligen Aufnahmestation 46, 52 mit der jeweiligen Pouchgehäusehälfte 28, 30 bestückt. Hierfür weist jedes der Transportbänder 42, 44 mehrere zueinander beabstandete rechteckförmige Aussparungen 64 auf. Dabei sind die Transportbänder 42, 44 entlang deren vollständigen Verlaufs mit den Aussparungen 64 versehene, wobei in der Figur 4 lediglich einige davon dargestellt sind. Die erste Pouchgehäusehälften 28 weisen, ebenso wie die hierzu symmetrischen zweiten Pouchgehäusehälften 30, wie in Figur 6 dargestellt, die topfförmige Schalen 32 auf, die innerhalb der Aussparungen 64 formschlüssig angeordnet werden. An diesen ist jeweils ein Rands 66 angeformt, der auf dem ersten Transportband 42 flächig aufliegt. Der Rand 66 bildet während der Fertigung zumindest teilweise eine Gastasche. Auch wird beispielsweise auf den Rand 66 mittels eines nicht näher dargestellten Werkzeugs zumindest teilweise ein Klebstoff aufgebracht. Auf das zweite Transportband 44 werden in gleicher Weise die zweiten Pouchgehäusehälften 30 an der zweiten Aufnahmestation 52 aufgelegt.

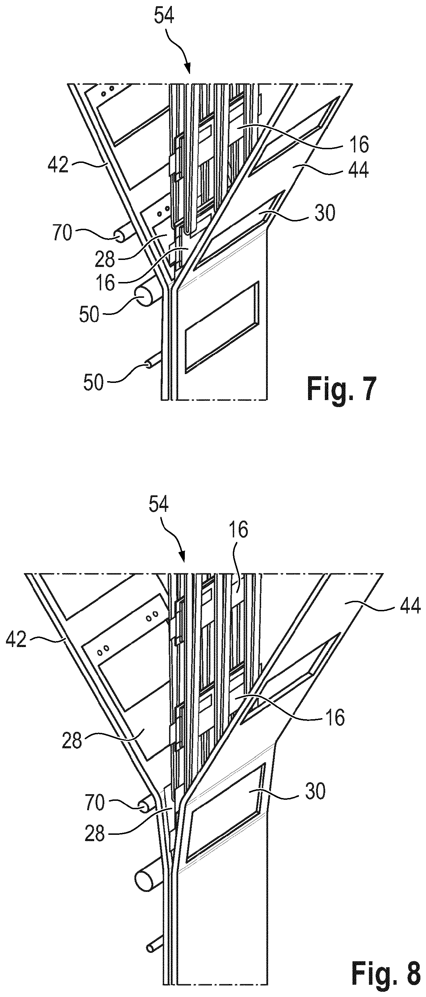

In einem sich anschließenden zweiten Arbeitsschritt 68 werden die beiden Pouchgehäusehälften 28, 30 sowie die Zellstapel 16 zu der Montageposition 48 mittels der jeweiligen Zuführvorrichtung 38, 40, 54 geführt und somit dorthin transportiert. Da die Zellstapel 16 sowie die Pouchgehäusehälften 28, 30 nacheinander der jeweiligen Zuführvorrichtung 38, 40, 54 zugeführt werden, und da diese jeweils kontinuierlich betrieben werden, gelangen sukzessive jeweils einer der Zellstapels 16, eine der ersten Pouchgehäusehälften 28 sowie eine der zweiten Pouchgehäusehälften 30 an der Montageposition 48 an, wie in Figur 7 dargestellt. Hierbei wird mittels der dritten Zuführvorrichtung 54 der jeweilige Zellstapel 16 bis zu der Montageposition 54 transportiert, der mittels einer der Führungsrollen 50 zumindest teilweise bestimmt ist. Dort erfolgt auch ein Wechsel der Transportrichtung der beiden Transportbänder 42,44, und diese weisen dort einen Knick auf. Der Zellstapel 16 wird derart von der dritte Zuführvorrichtung 54 fallen gelassen, dass dieser direkt an der Montageposition 54 zwischen die beiden zugeordneten Pouchgehäusehälften 28, 30, nämlich in die jeweilige Schale 32 fällt. Die Ränder 66 der jeweiligen Pouchgehäusehälfte 28, 30 sind dabei bezüglich der Schalen 32 bereits aufgrund des Änderung des Verlaufs der beiden Transportbänder 42,44 mittels der Führungsrolle 50 teilweise gebogen.

In einem sich anschließenden dritten Arbeitsschritt 69 wird das erste Transportband 42 mittels einer erste Bandrolle 70 in Richtung des zweiten Transportbands 44 bewegt. Die erste Bandrolle 70, an der das erste Transportband 42 anliegt, ist zwischen der Montageposition 48 und der ersten Aufnahmestation 46 angeordneten, wobei das erste Transportband 42 zwischen der ersten Bandrolle 70 und dem zweite Transportband 44 angeordnet ist. Die erste Bandrolle 70 ist längsverschieblich, und wird in Richtung des zweiten Transportbands 44 bewegt, sodass auch das erste Transportband 42 dorthin bewegt wird, wie in Figur 8 dargestellt.

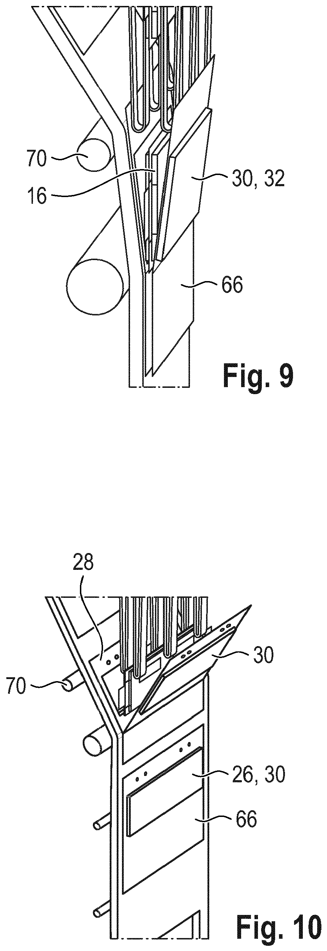

Auch die zweite Zuführvorrichtung 40 weist eine entsprechende zweite Bandrolle auf, die jedoch nicht dargestellt ist. Infolgedessen werden die beiden Pouchgehäusehälften 28, 30 von gegenüberliegenden Seiten um den jeweils zugeordneten Zellstapels 16 gelegt, wie in Figur 9 dargestellt, in der das zweite Transportband 44 nicht gezeigt ist.

Aufgrund der beiden Bandrollen 70 erfolgt somit kein Verbiegen der beiden Schalen 32, und lediglich der Rand 66 wird aufgrund des sich verändernden Verlaufs der Transportbänder 40, 42 verbogen. Anschließend werden die beiden Bandrollen 70 erneut in die ursprüngliche Position verbracht, sodass die Transportbänder 42, 44 zwischen der Montageposition 48 und der jeweiligen Aufnahmestation 46, 42 erneut geradlinig verlaufen, wie in Figur 10 dargestellt. Somit ist ein Fertigen einer weiteren der Batterien 14 ermöglicht.

Die aneinandergefügten Pouchgehäusehälften 28,30 werden mittels des Abschnitts, in dem die beiden Transportbänder 42, 44 parallel verlaufen, abtransportiert. Dort erfolgt mittels der beiden Transportbänder 42, 44 ein Aneinanderpressen der beiden Pouchgehäusehälften 28, 30, und diese werden miteinander versiegelt oder verschweißt, wofür zweckmäßigerweise ein Kunststoffschweißverfahren verwendet wird. Somit ist das Pouchgehäuse 26, das um den Zellstapel 16 gelegt ist, fertig erstellt ist. In einem nachfolgenden Arbeitsschritt wird das Pouchgehäuse 26 mit einem Elektrolyt befüllt und geladen, wobei entstehendes Gas in die mittels der Ränder 66 bereitgestellten Gastaschen entweicht, die im Anschluss daran versiegelt und von den Schalen 32 abgetrennt wird.

Zusammenfassend werden in die Pouchgehäusehälften 28, 30 nach deren Fertigung mittels Tiefziehens auf das jeweilige Transportband 42, 44 gelegt, die derart angeordnet sind, dass diese aufeinander zu laufen und somit die beiden Pouchgehäusehälften 28, 30 aufeinander zu bringen. Im Bereich des Zusammentreffens, also an der Montageposition 48, wird der zugeordnete Zellstapel 16 zugeführt und möglichst weit zwischen die beiden Pouchgehäusehälften 28, 30 transportiert. Damit hierbei eine Behinderung der ersten und zweiten Zuführvorrichtungen 38, 40 und eine Beschädigung der beiden Pouchgehäusehälften 28, 30 durch die dritte Zuführvorrichtung 54 vermieden ist, wird der Zellstapels 16 teilweise in die Pouchgehäusehälften 28, 30 fallen gelassen. Beim Zusammentreffen der beiden Pouchgehäusehälften 28, 30 werden diese im Bereich des Randes 66, der die Gastasche bilden soll, gebogen, und bilden eine Anlagefläche für den Zellstapel 16, wenn diese in die Schalen 32 hineinfällt.

Die drei Zuführvorrichtungen 38, 40, 44 werden kontinuierlich betrieben, sodass kontinuierlich Batterien 14 hergestellt werden. Je nach Betriebsgeschwindigkeit der Zuführvorrichtung 38, 40, 54 ist hierbei Ausstoß der Fertigungsvorrichtung 86 vorgegeben. Zudem sind die Zuführvorrichtung 38, 40, 54 taktil oder sensorelektrisch zueinander synchronisiert.

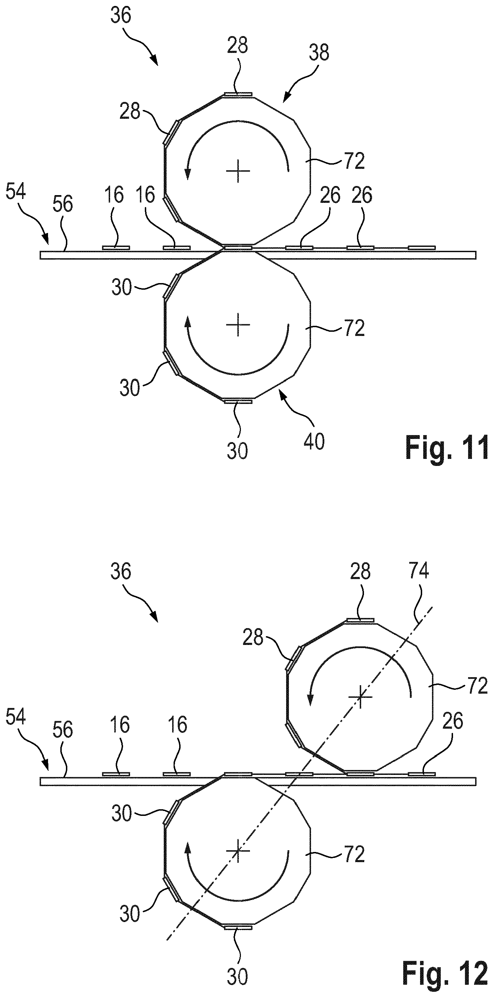

In Figur 11 ist eine alternative Ausgestaltungsform der Fertigungsvorrichtung 36 in einer Seitenansicht dargestellt. Auch hier weist die dritte Zuführvorrichtung 54 das Förderband 56 auf, auf das die Zellstapel 16 aufgelegt werden. Die erste Zuführvorrichtung 38 und die zweite Zuführvorrichtung 40 weisen jeweils eine Zuführwalze 72 auf, durch die das Förderband 56 hindurchgeführt ist, sodass die Zellstapel 16 zwischen die Zuführwalzen 72 bewegt werden. Die Zuführwalzen 72 werden bei Betrieb kontinuierlich rotiert. Mittels jeder der Zuführwalzen 72 werden die jeweils zugeordneten Pouchgehäusehälften 28, 30 aufgenommen und mittels zu dem Förderband 56 bewegt. Hierbei sind die Rotationsachsen der beiden Pouchgehäusehälften 72 auf einer Geraden angeordnet, die senkrecht zu dem Förderband 56 verläuft. Infolgedessen werden die durch die Zuführwalzen 72 hindurchbewegten Zellstapel 16 mit den Pouchgehäusehälften 28, 30 versehen, sodass die Pouchgehäuse 26 erstellt sind. Mittels der beiden Zuführwalzen 72 werden die jeweils einander zugeordneten Pouchgehäusehälften 28, 30 aufeinander gedrückt. Aufgrund eines nicht näher dargestellten Klebers, der auf jeweils eine der Pouchgehäusehälften 28, 30 aufgebracht ist, erfolgt ein Anhaften der beiden Pouchgehäusehälften 28, 30 aneinander. Alternativ werden die beiden Pouchgehäusehälften 28, 30 miteinander versiegelt oder mittels eines nicht näher gezeigten Kunststoffschweißgeräts verschweißt.

In Figur 12 ist eine alternative Ausgestaltungsform des Fertigungsvorrichtung 36 dargestellt, wobei die einzelnen Komponenten ebenfalls vorhanden sind. Jedoch sind die beiden Zuführwalze 72 zueinander versetzt, sodass eine Gerade 74, auf der die Rotationsachsen der beiden Zuführwalze 72 liegen, mit dem Förderband 56 einen Winkel von 45° einschließt. Infolgedessen werden die Zellstapels 16 zunächst mit den zweiten Pouchgehäusehälften 30 und erst anschließend mit den ersten Pouchgehäusehälften 28 versehen.

Auch bei den in Figur 11 und 12 gezeigten Varianten wird das Förderband 56 gemäß dem Verfahren 34 kontinuierlich betrieben.

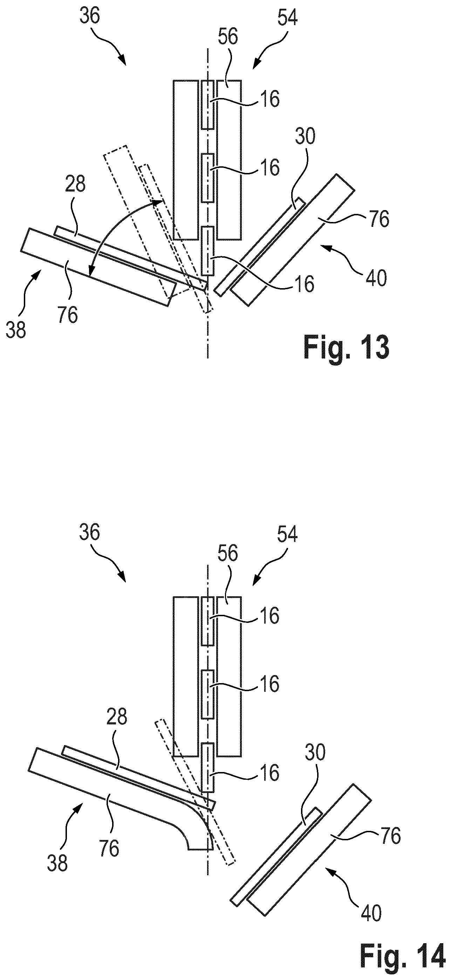

In Figur 13 ist eine weitere Alternative der Fertigungsvorrichtung 36 in einer Draufsicht gezeigt. Auf das Förderband 56 der dritten Zuführvorrichtung 54, das hier verkürzt dargestellt ist, und das horizontal angeordnet ist, werden die einzelnen Zellstapel 16 in einem Abstand zueinander aufgestellt. Die erste und zweite Zuführvorrichtung 38, 40 weisen jeweils eine Klappe 76 auf, die, wie für die erste Zuführvorrichtung 38 dargestellt, bezüglich einer vertikal verlaufenden Achse klappbar gelagert ist. An der Innenseite der Klappen 76, die auf der gleichen Seite des Förderbands 56 angeordnet sind, werden die Pouchgehäusehälften 28 ,30 angeordnet, wobei diese bezüglich der jeweiligen Klappe 76 auf der den Zellstapeln 16 zugewandten Seite bezüglich der Klappe 76 überstehen.

Wenn einer der Zellstapel 16 zwischen den Klappen 76 hindurch transportiert wird, werden diese aufgrund des Anstoßens des Zellstapels 16 an den jeweiligen Pouchgehäusehälften 28, 30 bewegt oder mittels eines zusätzlichen, nicht näher dargestellten Antriebs. Somit werden die beiden Pouchgehäusehälften 28, 30 beidseitig um den jeweiligen Zellstapel 16 gelegt. Im Anschluss hieran werden erneut die Klappen 76 in die ursprüngliche Position bewegt und mit den jeweiligen Pouchgehäusehälften 28, 30 bestückt.

Bei der in Figur 13 gezeigten Varianten werden die beiden Pouchgehäusehälften 28, 30 gleichzeitig um den jeweiligen Zellstapels 16 gelegt. Bei der in Figur 14 dargestellten Variante sind die beiden Klappen 76, und somit die erste und die zweite Zuführvorrichtung 38, 40, zueinander entlang der Bewegungsrichtung der Zellstapels 16, also entlang des Verlaufs des Förderbands 56, versetzt, sodass die Zellstapels 16 zunächst mit den ersten Pouchgehäusehälften 28 und im Anschluss hieran mit den zweiten Pouchgehäusehälften 30 versehen werden. Zudem sind die Klappen randseitig umgebogen, was eine Beschädigung der Pouchgehäusehälften 28, 30 vermeidet. Auch bei diesen beiden Varianten wird das Förderband 56 gemäß dem Verfahren 34 jeweils kontinuierlich betrieben.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den einzelnen Ausführungsbeispielen beschriebene Einzelmerkmale auch auf andere Weise miteinander kombinierbar, ohne den Gegenstand der Erfindung zu verlassen.

## Patentansprüche

1. Fertigungsvorrichtung (36) für Batterien (14), mit einer ersten Zuführvorrichtung (38) für eine erste Pouchgehäusehälfte (28), und mit einer zweiten Zuführvorrichtung (40) für eine zweite Pouchgehäusehälfte (30), sowie mit einer dritten Zuführvorrichtung (54) für einen Zellstapel (16), wobei die dritte Zuführvorrichtung (54) ein Förderband (56) umfasst, und wobei die erste Zuführvorrichtung (38) ein erstes Transportband (42) aufweist, das von einer ersten Aufnahmestation (46) für die erste Pouchgehäusehälfte (28) zu einer Montageposition (48) geführt ist, und wobei die zweite Zuführvorrichtung (40) ein zweites Transportband (44) aufweist, das von einer von der ersten Aufnahmestation (46) beabstandeten zweiten Aufnahmestation (52) für die zweite Pouchgehäusehälfte (30) zu der Montageposition (48) geführt ist,
**dadurch gekennzeichnet,**
**dass** zwischen der Montageposition (48) und der ersten Aufnahmestation (46) das erste Transportband (42) mittels einer längsverschieblichen ersten Bandrolle (70) geführt ist, wobei der Abstand des ersten Transportbands (42) zu dem zweiten Transportband (44) mittels der Position der ersten Bandrolle (70) bestimmt ist, oder
**dass** die Transportbänder (42, 44) jeweils Aussparungen (64) zur Aufnahme von topfförmigen Schalen (32) der jeweiligen Pouchgehäusehälfte (28, 30) aufweisen.

2. Fertigungsvorrichtung (36) nach Anspruch 1, **dadurch gekennzeichnet, dass** die dritte Zuführvorrichtung (54) ein zweites Förderband (58) umfasst, das derart angeordnet ist, dass der Zellstapel (16) zwischen dem Förderband (56) und dem zweiten Förderband (58) gehalten ist.

3. Fertigungsvorrichtung (36) nach Anspruch 1 oder 2, **dadurch gekennzeichnet, dass** der Zellstapel (16) mittels der dritten Zuführvorrichtung (54) bis zu der Montageposition (48) transportierbar ist.

4. Verfahren (32) zur Herstellung mehrerer Batterien (14) mittels einer Fertigungsvorrichtung (36) nach einem der Ansprüche 1 bis 3, wobei die dritte Zuführvorrichtung (54) kontinuierlich betrieben wird.

5. Verwendung einer Fertigungsvorrichtung (36) nach einem der Ansprüche 1 bis 3 zu Herstellung von Batterien (14).

## Claims

1. Manufacturing device (36) for batteries (14), comprising a first feed device (38) for a first pouch housing half (28), and comprising a second feed device (40) for a second pouch housing half (30), and comprising a third feed device (54) for a cell stack (16), wherein the third feed device (54) comprises a conveyor belt (56), and wherein the first feed device (38) has a first conveyor belt (42) which is guided from a first receiving station (46) for the first pouch housing half (28) to an assembly position (48), and wherein the second feed device (40) has a second conveyor belt (44) which is guided from a second receiving station (52), at a distance from the first receiving station (46), for the second pouch housing half (30) to the assembly position (48),
**characterized**
**in that** the first conveyor belt (42) is guided between the assembly position (48) and the first receiving station (46) by means of a longitudinally displaceable first belt roller (70), wherein the distance between the first conveyor belt (42) and the second conveyor belt (44) is determined by means of the position of the first belt roller (70), or
**in that** the conveyor belts (42, 44) each have recesses (64) for receiving pot-shaped shells (32) of the respective pouch housing half (28, 30).

2. Manufacturing device (36) according to Claim 1, **characterized in that** the third feed device (54) comprises a second conveyor belt (58), which is arranged in such a way that the cell stack (16) is held between the conveyor belt (56) and the second conveyor belt (58).

3. Manufacturing device (36) according to Claim 1 or 2, **characterized in that** the cell stack (16) can be transported up to the assembly position (48) by means of the third feed device (54).

4. Method (32) for producing a plurality of batteries (14) by means of a manufacturing device (36) according to any of Claims 1 to 3, wherein the third feed device (54) is operated continuously.

5. Use of a manufacturing device (36) according to any of Claims 1 to 3 for producing batteries (14).

## Revendications

1. Dispositif de production (36) pour des batteries (14), avec un premier dispositif d'amenée (38) pour une première moitié (28) de boîtier de poche et avec un deuxième dispositif d'amenée (40) pour une seconde moitié (30) de boîtier de poche, ainsi qu'avec un troisième dispositif d'amenée (54) pour une pile d'éléments (16), le troisième dispositif d'amenée (54) comprenant une bande de convoyage (56), et le premier dispositif d'amenée (38) comportant une première bande de transport (42) qui est guidée depuis une première station de réception (46) pour la première moitié (28) de boîtier de poche à une position de montage (48), et le deuxième dispositif d'amenée (40) comportant une deuxième bande de transport (44), qui est guidée depuis une deuxième station de réception (52), espacée de la première station de réception (46), pour la seconde moitié (30) de boîtier de poche vers la position de montage (48),
**caractérisé en ce**
**que** la première bande de transport (42) est guidée au moyen d'un premier rouleau de bande (70) pouvant coulisser longitudinalement entre la position de montage (48) et la première station de réception (46), la distance de la première bande de transport (42) par rapport à la deuxième bande de transport (44) étant définie au moyen de la position du premier rouleau de bande (70), ou
**que** les bandes de transport (42, 44) comportent chacune des évidements (64) destinés à recevoir des coques (32) en forme de pot de la moitié (28, 30) de boîtier de poche respective.

2. Dispositif de production (36) selon la revendication 1, **caractérisé en ce que** le troisième dispositif d'amenée (54) comprend une deuxième bande de convoyage (58), qui est disposée de telle manière que la pile d'éléments (16) est maintenue entre la bande de convoyage (56) et la deuxième bande de convoyage (58).

3. Dispositif de production (36) selon la revendication 1 ou 2, **caractérisé en ce que** la pile d'éléments (16) peut être transportée jusqu'à la position de montage (48) au moyen du troisième dispositif d'amenée (54).

4. Procédé (32) de fabrication de plusieurs batteries (14) au moyen d'un dispositif de production (36) selon l'une des revendications 1 à 3, le troisième dispositif d'amenée (54) fonctionnant en continu.

5. Utilisation d'un dispositif de production (36) selon l'une des revendications 1 à 3 pour fabriquer des batteries (14).
